(19) **Europäisches Patentamt / European Patent Office / Office européen des brevets**

(11) **EP 4 697 243 A1**

(12) # EUROPEAN PATENT APPLICATION

(43) Date of publication:
**18.02.2026 Bulletin 2026/08**

(21) Application number: **25195110.9**

(22) Date of filing: **11.08.2025**

(51) International Patent Classification (IPC):
**G06N 10/20** (2022.01)    **G06N 10/80** (2022.01)
**G06N 10/60** (2022.01)

(52) Cooperative Patent Classification (CPC):
**G06N 10/20; G06N 10/60; G06N 10/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.08.2024 JP 2024135185**

(71) Applicant: **Fujitsu Limited**
**Kawasaki-shi, Kanagawa 211-8588 (JP)**

(72) Inventor: **GOKITA, Shun**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM COMPUTATION SUPPORT METHOD, AND INFORMATION PROCESSING APPARATUS**

(57)     An information processing apparatus divides a quantum circuit to generate first and second sub-circuits. The information processing apparatus generates a plurality of combinations each including one of basis conversions to be performed at an end portion of the first sub-circuit and one of initial values to be set at a start portion of the second sub-circuit. The information processing apparatus sequentially selects a combination to be used for execution from the plurality of combinations, and causes a quantum computer to execute, in order from the selected combination, a first quantum computation including execution of the first sub-circuit and measurement corresponding to the selected combination, and a second quantum computation including initialization corresponding to the selected combination and execution of the second sub-circuit. The information processing apparatus computes tensor products based on execution results of the first and second quantum computations and a sum of the tensor products.

FIG. 1

EP 4 697 243 A1

**Description**

FIELD

The embodiments discussed herein relate to a computer program, a quantum computation support method, and an information processing apparatus.

BACKGROUND

In a quantum computer, procedures of quantum computation are represented by quantum circuits. As a quantum computation becomes more complex, the scale of the corresponding quantum circuit increases, and it becomes difficult to execute the quantum circuit due to the hardware limitations of the quantum computer. To deal with this, a method has been considered in which a large-scale quantum circuit is divided into small-scale sub-circuits and the sub-circuits are individually executed and measured in parallel by a plurality of qubit devices or a plurality of quantum computers. In this case, the probability amplitude of the original quantum circuit is reconstructed through classical computation based on the execution results of the plurality of sub-circuits. By executing a large-scale quantum circuit by dividing it into sub-circuits, it becomes possible to execute the quantum circuit using high-fidelity small-scale quantum computers, and an improvement in computational accuracy is expected.

As a technique for dividing a quantum circuit into a plurality of sub-circuits, for example, a method has been proposed in which sub-circuit dependencies are determined for a plurality of quantum sub-circuits, and the plurality of quantum sub-circuits are simulated according to the sub-circuit dependencies. In addition, as a method for implementing quantum hybrid computation, a method has been proposed in which each function corresponding to a hybrid program is assigned to either central processing unit (CPU) processing or quantum processing unit (QPU) processing.

As a hybrid computer technology of a quantum computer and a classical computer, for example, a method for integrating quantum-based processing devices into classical architectures and software frameworks has been proposed.

As a technique related to the management of access to distributed quantum computing resources, for example, a technique has been disclosed, in which a job request is individualized based on user permissions and pushed onto a queue for execution by a quantum computing resource is disclosed. See, for example, the following literatures.

Japanese National Publication of International Patent Application No. 2020-534603
Japanese National Publication of International Patent Application No. 2021-530783
U.S. Patent Application Publication No. 2017/0223143
U.S. Patent Application Publication No. 2018/0365585
Debasmita Bhoumik, Ritajit Majumdar, Amit Saha, and Susmita Sur-Kolay, "Distributed Scheduling of Quantum Circuits with Noise and Time Optimization," arXiv.2309.06005v2, 12 Oct 2023

In the case where a quantum circuit is executed by dividing it into a plurality of sub-circuits, the final probability amplitude is obtained as the sum of tensor products of the execution results of the sub-circuits. In this case, as the number of divisions increases, the processing time of the classical computation for computing the tensor products increases significantly. For example, in the case where the original quantum circuit is divided at K locations (K is a natural number) into $n_C$ sub-circuits, the computational complexity increases on the order of $O(4^K)$. As a result, the overall computation time based on the quantum circuit becomes longer.

SUMMARY

According to an embodiment of one aspect of the present disclosure it is desirable to improve the efficiency of computation based on a quantum circuit.

According to an embodiment of one aspect, there is provided a computer program that causes a computer to perform a process including: dividing a quantum circuit at a dividing point on a line representing gate operations on a qubit in the quantum circuit to generate a first sub-circuit and a second sub-circuit, the first sub-circuit including gate operations before the dividing point for a first qubit corresponding to the dividing point, the second sub-circuit including gate operations after the dividing point for the first qubit; generating a plurality of combinations, each of which includes one of a plurality of basis conversions to be performed at an end portion of the first sub-circuit corresponding to the dividing point and one of a plurality of initial values to be set at a start portion of the second sub-circuit corresponding to the dividing point; sequentially selecting a combination to be used for execution from the plurality of combinations; causing a quantum computer to execute, in order from the selected combination, a first quantum computation including execution of the first sub-circuit and a basis conversion indicated in the selected combination at the end portion of the first sub-circuit, and a second quantum computation including initialization to an initial value indicated by the selected combination at the start portion of the second sub-circuit and execution of the second sub-circuit; computing, upon acquiring execution results of the first quantum computation and the second quantum computation for any one of the plurality of combinations, a tensor product based on the acquired execution results; and computing a sum of tensor products computed for the plurality of combinations.

BRIEF DESCRIPTION OF DRAWINGS

The invention is described, by way of example only, with reference to the following drawings, in which:

FIG. 1 illustrates an example of a quantum computation support method according to a first embodiment;
FIG. 2 illustrates an example of a configuration of a quantum computing system;
FIG. 3 illustrates an example of hardware of the quantum computing system;
FIG. 4 illustrates a first example of sub-circuits generated by division;
FIG. 5 illustrates a second example of sub-circuits generated by division;
FIG. 6 illustrates an example of a probability amplitude computation process using classical computation;
FIG. 7 illustrates an example of computation timing of tensor products for each scheduling method;
FIG. 8 is a block diagram illustrating an example of functions of each device used for quantum computation;
FIG. 9 is a flowchart illustrating an example procedure for a quantum computation support process; and
FIG. 10 is a flowchart illustrating an example procedure for a post-processing-prioritized scheduling process.

DESCRIPTION OF EMBODIMENTS

Hereinafter, embodiments will be described with reference to the drawings. A plurality of embodiments may be combined unless they exclude each other.

[First Embodiment]

A first embodiment relates to a quantum computation support method for improving the computational efficiency in the case where a quantum circuit is executed by dividing it into sub-circuits.

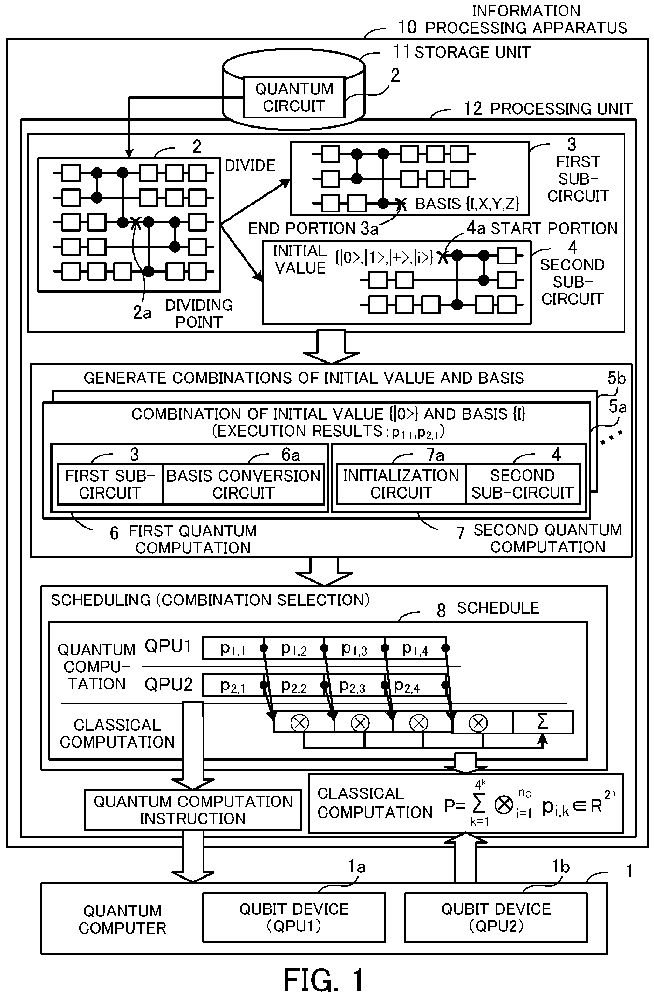

FIG. 1 illustrates an example of the quantum computation support method according to the first embodiment. FIG. 1 illustrates an information processing apparatus 10 for implementing the quantum computation support method. The information processing apparatus 10 is able to implement the quantum computation support method by executing, for example, a quantum computation support program.
The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.
The storage unit 11 stores a quantum circuit 2 representing a quantum computation procedure for obtaining a solution to a problem to be solved.
The processing unit 12 causes a quantum computer 1 to execute quantum computation according to the quantum circuit 2. The quantum computer 1 includes a plurality of qubit devices 1a and 1b. In this case, the processing unit 12 is able to divide the quantum circuit 2 and cause the quantum computer 1 to perform parallel processing. For example, the processing unit 12 divides the quantum circuit 2 as follows.
The processing unit 12 divides the quantum circuit 2 at a dividing point 2a on a line representing gate operations on a qubit in the quantum circuit 2, thereby generating a first sub-circuit 3 and a second sub-circuit 4. If there are many dividing points 2a, more sub-circuits are generated.
The first sub-circuit 3 includes the gate operations before the dividing point 2a set for the qubit (the third qubit in the example of FIG. 1) corresponding to the dividing point 2a in the quantum circuit 2. The first sub-circuit 3 includes an initialization circuit that sets qubits to be operated to the same initial values (for example, $|0\rangle$) as in the quantum circuit 2. The first sub-circuit 3 also includes a basis conversion circuit in order to measure each qubit other than the qubit (the third qubit in the example of FIG. 1) corresponding to the end portion 3a in the first sub-circuit 3 generated by the division in the same basis as in the quantum circuit 2.
The second sub-circuit 4 includes the gate operations after the dividing point 2a set for the qubit corresponding to the dividing point 2a in the quantum circuit 2. The second sub-circuit 4 includes an initialization circuit that sets each qubit other than the qubit (the first qubit in the example of FIG. 1) corresponding to the start portion 4a in the second sub-circuit 4 generated by the division, to the same initial value (for example, $|0\rangle$) as in the quantum circuit 2. The second sub-circuit 4 also includes a basis conversion circuit in order to measure each operated qubit in the same basis as in the quantum circuit 2.
The processing unit 12 generates a plurality of combinations 5a, 5b, ... each of which includes one of a plurality of basis conversions, which are performed at the end portion 3a of the first sub-circuit 3, and one of a plurality of initial values, which are set at the start portion 4a of the second sub-circuit 4. The plurality of basis conversions are represented by Pauli operators such as "I, X, Y, and Z". The plurality of initial values to be set include, for example, "$|0\rangle$, $|1\rangle$, $|+\rangle$, and $|i\rangle$". For example, the processing unit 12 combines an initial value and a basis conversion in order to obtain execution results. Here, these execution results are used in classical computation to compute a tensor product (for the equation used in this classical computation, see Formula (2), which will be described later), and the classical computation provides the execution result (the probability amplitude for each possible state of qubits) of the quantum circuit 2. The processing unit 12 generates the plurality of combinations 5a, 5b, ... each including an initial value and a basis conversion.

For each of the plurality of combinations 5a, 5b, ..., for example, the processing unit 12 generates a job for executing a first quantum computation 6 using the first sub-circuit 3 and a job for executing a second quantum computation 7 using the second sub-circuit 4.

The first quantum computation 6 includes the execution of the first sub-circuit 3, and the basis conversion indicated in the corresponding combination for the qubit corresponding to the end portion 3a. For example, the processing unit 12 adds, after the first sub-circuit 3, a basis conversion circuit 6a that performs the basis conversion indicated in the combination on the qubit corresponding to the end portion 3a.

The second quantum computation 7 includes the initialization of the qubit corresponding to the start portion 4a of the second sub-circuit 4 to the initial value indicated in the corresponding combination, and the execution of the second sub-circuit 4. For example, the processing unit 12 adds, before the second sub-circuit 4, an initialization circuit 7a that sets the initial value indicated in the combination at the start portion 4a.

The processing unit 12 performs scheduling of the jobs that each execute a quantum computation using the first sub-circuit 3 or the second sub-circuit 4, to determine a job execution schedule 8. For example, the processing unit 12 sequentially selects a combination to be used for execution from the plurality of combinations 5a, 5b, .... Then, the processing unit 12 determines the schedule 8 so as to cause the quantum computer 1 to execute the job of the first quantum computation 6 corresponding to a selected combination and the job of the second quantum computation 7 corresponding to the selected combination in the order of selection. The first quantum computation 6 corresponding to the selected combination includes the execution of the first sub-circuit 3 and the basis conversion indicated in the selected combination. The second quantum computation 7 corresponding to the selected combination includes the initialization of a qubit of the second sub-circuit 4 to the initial value indicated in the selected combination, and the execution of the second sub-circuit 4.

The processing unit 12 instructs the quantum computer 1 to execute the first quantum computation 6 or the second quantum computation 7 of each of the plurality of combinations 5a, 5b, ... according to the determined schedule 8.

Each time the processing unit 12 acquires the execution results of the first quantum computation 6 and the second quantum computation 7 for any one of the plurality of combinations 5a, 5b, ..., the processing unit 12 computes a tensor product based on the acquired execution results. Further, the processing unit 12 computes the sum of the tensor products obtained for the plurality of combinations.

In this way, based on the execution results of the first sub-circuit 3 and the second sub-circuit 4, it is possible to obtain the execution result of the original quantum circuit 2. In this process, the combinations 5a, 5b, ... each including an initial value and a basis conversion are sequentially selected, and the quantum computer 1 is instructed to execute the first quantum computation 6 and the second quantum computation 7 of the selected combination. Accordingly, the processing unit 12 is able to acquire the execution results of the first quantum computation 6 and the second quantum computation 7 corresponding to the same combination with a small time difference. This enables the processing unit 12 to perform the computation of the tensor product early, thereby shortening the time from the start of the quantum computation to the end of the classical computation (the computation of the tensor products and the computation of the sum of the tensor products). That is, the computational efficiency in the case where the quantum circuit 2 is divided into the first sub-circuit 3 and the second sub-circuit 4 is improved.

For example, the processing unit 12 instructs the quantum computer 1 to execute a job every time it detects an available qubit device. There is a case where the processing unit 12 detects an available qubit device among the plurality of qubit devices 1a and 1b after instructing the quantum computer 1 to execute one of the first quantum computation 6 and the second quantum computation 7 corresponding to the Nth (N is a natural number) selected combination, which is referred to as a first combination. In this case, the processing unit 12 instructs the quantum computer 1 to execute the other of the first quantum computation 6 and the second quantum computation 7 for the first combination, whose execution has not yet been instructed.

There is also a case where the processing unit 12 detects an available qubit device among the plurality of qubit devices 1a and 1b after instructing the quantum computer 1 to execute both the first quantum computation 6 and the second quantum computation 7 for the first combination. In this case, the processing unit 12 instructs the quantum computer 1 to execute either the first quantum computation 6 or the second quantum computation 7 for the (N + 1)th selected combination, which is referred to as a second combination.

As described above, when the processing unit 12 detects an available qubit device, the processing unit 12 preferentially instructs the quantum computer 1 to execute one quantum computation, if its execution has not yet been instructed, among the quantum computations of the Nth selected combination. In addition, when the processing unit 12 detects an available qubit device, the processing unit 12 instructs the quantum computer 1 to execute a quantum computation for the (N + 1)th selected combination if instructions to execute the quantum computations for the Nth selected combination are complete. Accordingly, the instructions to execute the quantum computations for the same combination are made consecutively, which makes it possible to compute the tensor product of the execution results of these quantum computations early.

On the other hand, in the case where the time needed for the quantum computation and the time needed for the classical computation do not satisfy a predetermined condition, the processing unit 12 may perform job scheduling using a different method. For example, the processing unit 12 calculates a first time needed to execute the first quantum computations 6 and the second quantum computations 7 for the plurality of combinations 5a, 5b, ... and a second time needed to compute the tensor product for each of the plurality of combinations 5a, 5b, ... and the sum of the tensor products. In the case where the first time and the second time satisfy a predetermined condition, the processing unit 12 performs the process of sequentially selecting a combination to be used for execution from the plurality of combinations 5a, 5b, ..., and the process of causing the quantum computer 1 to execute the first quantum computation 6 and the second quantum computation 7 for the selected combination, sequentially in the order of selection.

Accordingly, the processing unit 12 is able to perform scheduling of jobs such as to start the computation of tensor products early only in the case where it is important to shorten the computation time, while, in other cases, the processing unit 12 is able to perform the scheduling such as to improve other indices such as fidelity.

The predetermined condition for the time needed for the quantum computation and the time needed for the classical computation is, for example, a condition that the sum of the first time and the second time exceeds a threshold. For example, if the sum of the first time and the second time exceeds the threshold, the processing unit 12 sequentially selects a combination to be used for execution from the plurality of combinations 5a, 5b, ..., and causes the quantum computer 1 to execute the first quantum computation 6 and the second quantum computation corresponding to the selected combination, in the order of selection.

Thus, even in the case where the classical computation is performed after all quantum computations are complete, if the total computation time is less than or equal to the threshold, it is possible to perform the scheduling such as to improve other indices such as fidelity.

For example, in the case where the first time and the second time do not satisfy the predetermined condition, the processing unit 12 performs scheduling in consideration of fidelity. In this case, the processing unit 12 determines a schedule for executing the first quantum computation 6 and the second quantum computation 7 for each of the plurality of combinations 5a, 5b, ... on the plurality of qubit devices 1a and 1b, based on the error rates of the plurality of qubit devices 1a and 1b. Then, the processing unit 12 instructs the quantum computer 1 to execute the first quantum computation 6 and the second quantum computation 7 for each of the plurality of combinations 5a, 5b, ... according to the determined schedule.

In this way, in the case where an improvement of fidelity is more important than that of processing efficiency, the processing unit 12 is able to perform scheduling such as to improve the fidelity. As a result, it becomes possible to obtain a highly accurate computation result.

Note that FIG. 1 illustrates only one dividing point 2a by way of example, but the quantum circuit may be divided at a plurality of dividing points. In the case of setting a plurality of dividing points, the number of generated combinations each including an initial value and a basis conversion increases, and the number of computations of a tensor product increases accordingly. As the number of computations of a tensor product increases, the job scheduling method illustrated in FIG. 1 becomes more effective for improving the computational efficiency.

[Second Embodiment]

A second embodiment relates to a quantum computing system that suppresses an increase in computation time in the case where a large-scale quantum circuit is divided into a plurality of sub-circuits for distributed execution.

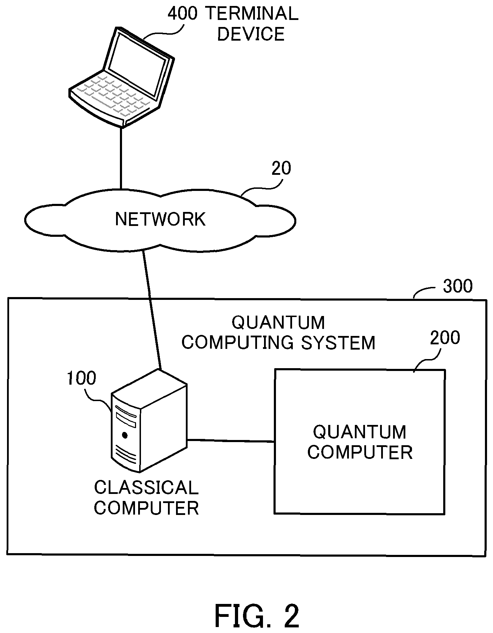

FIG. 2 illustrates an example of a configuration of a quantum computing system. The quantum computing system 300 is, for example, a computer system that performs computation utilizing the principles of quantum mechanics. The quantum computing system 300 includes a classical computer 100 and a quantum computer 200. The classical computer 100 is a von Neumann computer. The quantum computer 200 is a non-von Neumann computer that performs quantum computation by applying quantum gates to qubits.

A terminal device 400 is connected to the classical computer 100 via a network 20. The terminal device 400 is a von Neumann computer that is used by a user who requests quantum computation by the quantum computing system 300. The classical computer 100 receives a quantum computation request including a quantum circuit from, for example, the terminal device 400. The quantum circuit represents a sequence of gate operations on qubits through the arrangement of elements such as gates. A qubit is a bit that is able to represent a superposition state of the "0" state and the "1" state.

The classical computer 100 instructs the quantum computer 200 to perform gate operations on qubits according to the quantum computation request received from the terminal device 400. The classical computer 100 then receives the measurement result of the qubits from the quantum computer 200.

The quantum computer 200 performs the gate operations on the qubits according to the instruction received from the classical computer 100. The quantum computer 200 then measures the states of the quantum gates and transmits the measurement result to the classical computer 100.

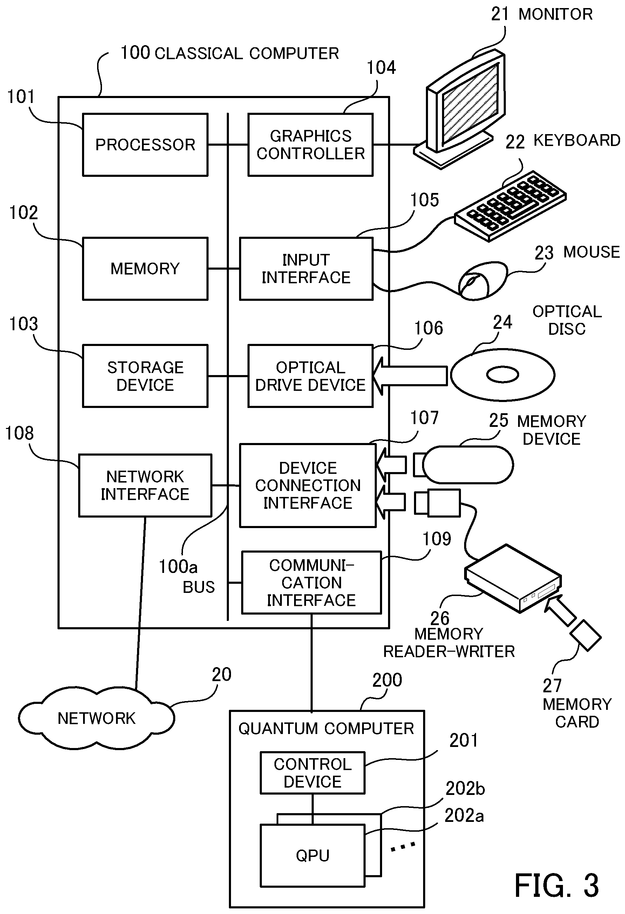

FIG. 3 illustrates an example of hardware of the quantum computing system. The entire classical computer 100 is controlled by a processor 101. A memory 102 and a plurality of peripheral devices are connected to the processor 101 via a bus 100a. The processor 101 may be a multiprocessor. A set of processors in a multiprocessor system may be referred to as the processor 101. The processor 101 may be referred to as processor circuitry. Each of the plurality of processors is able to perform some or all of a plurality of processes performed by the classical computer 100. Two or more of a plurality of related processes among the plurality of processes may be performed by different processors. The processor 101 is, for example, a CPU, a micro processing unit (MPU), or a digital signal processor (DSP). At least a part of the functions implemented by the processor 101 executing a program may be implemented by another electronic circuit. Examples of other electronic circuits include a graphics processing unit (GPU), a neural processing unit (NPU), an application specific integrated circuit (ASIC), and a programmable logic device (PLD).

The memory 102 is used as a main storage device of the classical computer 100. The memory 102 temporarily stores at least part of operating system (OS) programs and application programs to be executed by the processor 101. The memory 102 also stores various data used for processing by the processor 101. As the memory 102, for example, a volatile semiconductor storage device such as a random access memory (RAM) is used.

The peripheral devices connected to the bus 100a include a storage device 103, a graphics controller 104, an input interface 105, an optical drive device 106, a device connection interface 107, a network interface 108, and a communication interface 109.

The storage device 103 electrically or magnetically writes and reads data to and from a built-in storage medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The graphics controller 104 is an arithmetic device that performs image processing. The graphics controller 104 is, for example, a GPU. A monitor 21 is connected to the graphics controller 104. The graphics controller 104 displays images on the screen of the monitor 21 in accordance with instructions from the processor 101. Examples of the monitor 21 include a display device using organic electro luminescence (EL) and a liquid crystal display device. In the case where, for example, a GPU is used as the graphics controller 104, the graphics controller 104 is able to execute complex numerical computations such as matrix computations.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable storage medium on which data is recorded so as to be readable by reflection of light. The optical disc 24 may be a digital versatile disc (DVD), a DVD-RAM, a compact disc read only memory (CD-ROM), a CD-recordable (CD-R)/CD-rewritable (CD-RW), or another.

The device connection interface 107 is a communication interface for connecting peripheral devices to the classical computer 100. For example, a memory device 25 and a memory reader-writer 26 may be connected to the device connection interface 107. The memory device 25 is a storage medium having a function of communicating with the device connection interface 107. The memory reader-writer 26 is a device that writes data to a memory card 27 or reads data from the memory card 27. The memory card 27 is a card-type storage medium.

The network interface 108 is connected to the network 20. The network interface 108 transmits and receives data to and from other computers and communication devices via the network 20. For example, the network interface 108 is a wired communication interface that is connected to a wired communication device such as a switch or a router via a cable. Alternatively, the network interface 108 may be a wireless communication interface that is communicatively connected to a wireless communication device such as a base station or an access point by radio waves.

The communication interface 109 is connected to the quantum computer 200. The communication interface 109 communicates with the quantum computer 200 and transmits instructions to execute quantum computation to the quantum computer 200. The communication interface 109 receives the execution results of the quantum computation from the quantum computer 200.

With the hardware as described above, the classical computer 100 is able to implement the processing functions of the second embodiment. The apparatus illustrated in the first embodiment is also able to be implemented with hardware similar to that of the classical computer 100 illustrated in FIG. 3.

The classical computer 100 implements the processing functions of the second embodiment by executing a program recorded in a computer-readable storage medium, for example. The program describing the processing contents to be executed by the classical computer 100 may be stored in various storage media. For example, the program to be executed by the classical computer 100 may be stored in the storage device 103. The processor 101 loads at least part of the program from the storage device 103 into the memory 102 and executes the program. The program to be executed by the classical computer 100 may be stored in a portable storage medium such as the optical disc 24, the memory device 25, or the memory card 27. The program stored in the portable storage medium becomes executable after being installed in the storage device 103 under the control of the processor 101, for example. Alternatively, the processor 101 may read the program directly from the portable storage medium and execute the program.

The quantum computer 200 includes a control device 201 and a plurality of QPUs 202a, 202b, .... The control device 201 performs gate operations on qubits in the QPUs 202a, 202b, ... according to instructions from the classical computer 100. For example, the control device 201 performs the gate operations on the qubits by irradiating the qubits with microwaves having a predetermined frequency.

Each of the QPUs 202a, 202b, ... has a plurality of qubits. The qubits included in the QPUs 202a, 202b, ... may be of any type such as a superconducting type, a trapped-ion type, or a cold atom type, for example. The QPUs 202a, 202b, ... may also be referred to as qubit devices.

A user who uses the quantum computing system 300 uses the terminal device 400 to create, for example, a quantum circuit for solving a problem to be solved using quantum computation. When the user instructs the terminal device 400 to execute the quantum computation, the terminal device 400 transmits a quantum computation request including the created quantum circuit to the quantum computing system 300.

In the quantum computing system 300, the classical computer 100 causes the quantum computer 200 to execute the quantum computation based on the quantum circuit in response to the quantum computation request. At this time, the classical computer 100 converts the quantum circuit to be executed into a quantum circuit using executable quantum gates, according to the hardware specifications of the quantum computer 200 (such as native gates specific to the QPUs).

The above-described quantum computing system 300 divides a quantum circuit specified by the user into a plurality of sub-circuits, and executes the plurality of sub-circuits in parallel using a plurality of QPUs to perform quantum computation. In this process, the classical computer 100 of the quantum computing system 300 estimates the total computation time including the classical computation following the quantum computation, and determines a scheduling method for the execution timing of the plurality of sub-circuits on the basis of whether the estimated computation time is greater than or equal to a threshold. For example, if the computation time is less than the threshold, the classical computer 100 performs the scheduling such as to improve fidelity. If the computation time is greater than or equal the threshold, the classical computer 100 performs the scheduling such as to reduce the computation time.

In the case where an original quantum circuit is divided at "K" points to generate "$n_C$" sub-circuits, the sub-circuits following the dividing points are executed while the quantum states at the dividing points remain unknown. To avoid this, with respect to a sub-circuit that includes the portion before a dividing point, a plurality of sub-circuits for execution are generated by adding different basis conversion circuits at the end portion of the sub-circuit corresponding to the dividing point, so that a plurality of basis conversions "I, X, Y, and Z" are applied at the end portion and the probability amplitudes after the basis conversions are measured.

In a basis conversion circuit, for example, the basis conversion corresponding to a basis to be measured is performed. The basis conversions are represented by the following Pauli operators.

$$I = \begin{pmatrix} 1 & 0 \\ 0 & 1 \end{pmatrix}, X = \begin{pmatrix} 0 & 1 \\ 1 & 0 \end{pmatrix}, Y = \begin{pmatrix} 0 & -i \\ i & 0 \end{pmatrix}, Z = \begin{pmatrix} 1 & 0 \\ 0 & -1 \end{pmatrix} \qquad (1)$$

Among the basis conversions "I, X, Y, and Z", "I" corresponds to the identity basis, which does not need basis conversion.

With respect to a sub-circuit that includes the portion after a dividing point, the initial value of the qubit at the start portion corresponding to the dividing point is unknown. Therefore, a plurality of initial values are set at the start portion, and the sub-circuit is executed a plurality of times with different initial values.

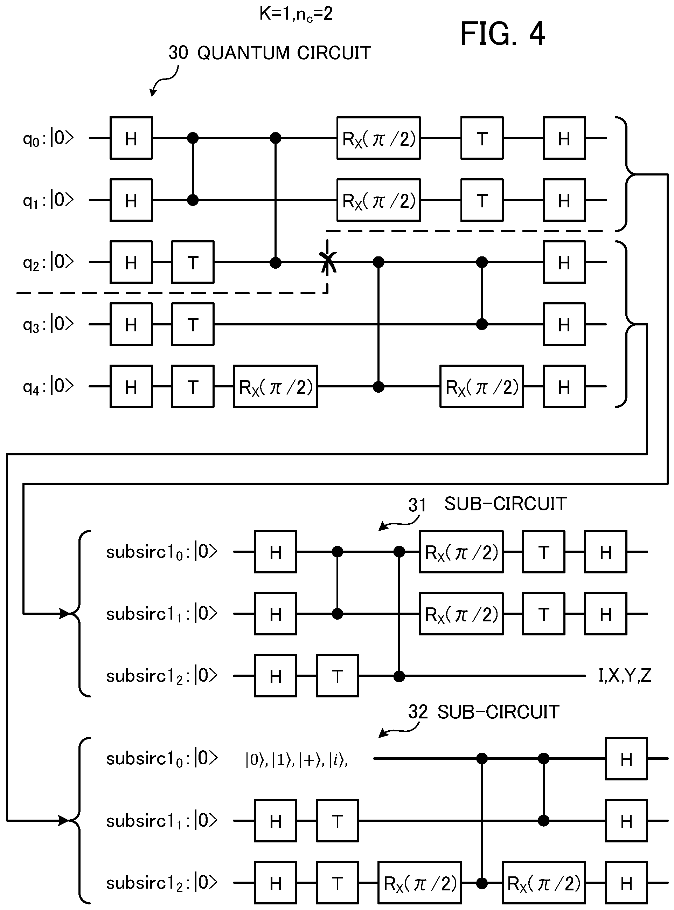

FIG. 4 illustrates a first example of sub-circuits generated by division. A quantum circuit 30 is divided at one point (K = 1) in the gate operations performed on the third qubit, thereby generating two sub-circuits 31 and 32 ($n_C$ = 2). In this case, the sub-circuit 31 is executed a plurality of times, with a different basis conversion circuit added in each execution, in order to obtain the probability amplitude after each of the basis conversions "I, X, Y, Z" on the third qubit.

In the original quantum circuit 30, the output of the third qubit in the sub-circuit 31 becomes the input of the first qubit in the sub-circuit 32. Since the quantum circuit 30 is divided into the plurality of sub-circuits 31 and 32, the input state of the first qubit in the sub-circuit 32 is not determined. Therefore, the sub-circuit 32 is executed repeatedly with the first qubit initialized to each of "$|0\rangle$, $|1\rangle$, $|+\rangle$, and $|i\rangle$". To this end, for the execution of the sub-circuit 32, an initialization circuit is added to the sub-circuit 32 to set the first qubit to a predetermined initial value.

For the sub-circuits 31 and 32, four combinations each including a quantum computation involving a basis conversion and a quantum computation using an initial value are generated. Then, for each combination, the tensor product of the computation results is obtained through classical computation. For example, one combination includes a quantum computation involving the basis conversion of "I" in the sub-circuit 31 and a quantum computation using "|0⟩" as the initial value in the sub-circuit 32. Another combination includes a quantum computation involving the basis conversion of "Z" in the sub-circuit 31 and a quantum computation using "|1⟩" as the initial value in the sub-circuit 32. Yet another combination includes a quantum computation involving the basis conversion of "X" in the sub-circuit 31 and a quantum computation using "|+⟩" as the initial value in the sub-circuit 32. The last combination includes a quantum computation involving the basis conversion of "Y" in the sub-circuit 31 and a quantum computation using "|i⟩" as the initial value in the sub-circuit 32.

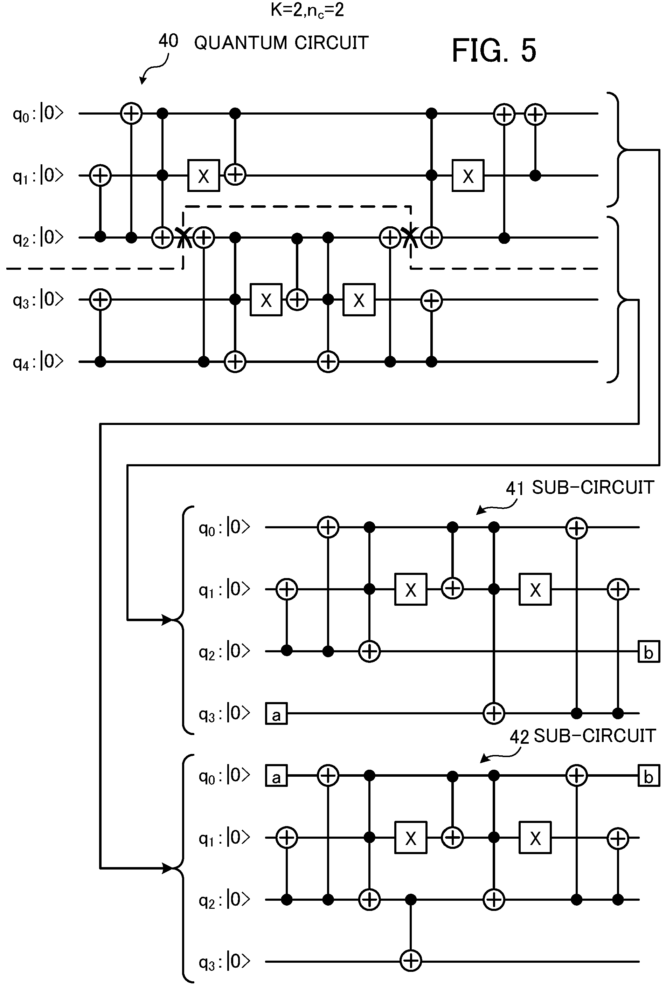

FIG. 5 illustrates a second example of sub-circuits generated by division. A quantum circuit 40 is divided at two points (K = 2) in the gate operations performed on the third qubit, thereby generating two sub-circuits 41 and 42 ($n_C = 2$). In the example illustrated in FIG. 5, since the quantum circuit is divided at two points on the line representing the gate operations that are performed on a single qubit, the number of dividing points is two, but the number of sub-circuits is "2".

For these sub-circuits 41 and 42, the following 16 combinations each including an initial value "a" and a basis conversion "b" are set.

$$(a, b) = \quad (|0\rangle, I), \ (|1\rangle, I), \ (|+\rangle, I), \ (|i\rangle, I),$$
$$(|0\rangle, X), \ (|1\rangle, X), \ (|+\rangle, X), \ (|i\rangle, X),$$
$$(|0\rangle, Y), \ (|1\rangle, Y), \ (|+\rangle, Y), \ (|i\rangle, Y),$$
$$(|0\rangle, Z), \ (|1\rangle, Z), \ (|+\rangle, Z), \ (|i\rangle, Z)$$

The probability amplitude "P" of the output value after the execution of the individual quantum circuit 30 and 40 illustrated in FIGS. 4 and 5 is computed using the classical computation represented by Formula (2) based on the probability amplitudes "$p_{i,k}$" obtained as the execution results of the corresponding sub-circuits 31, 32, 41, and 42.

$$P = \sum_{k=1}^{4^K} \otimes_{i=1}^{n_C} p_{i,k} \in \mathbb{R}^{2^n} \qquad (2)$$

Here, i is a number identifying a sub-circuit, and k is a number identifying a combination of an initial value and a basis conversion. As represented by Formula (2), the probability amplitude "P" of the original quantum circuit is computed by computing the tensor product of the execution results of the sub-circuits for each combination of an initial value and a basis conversion and summing the tensor products.

The computation of Formula (2) is classical computation and is executed by the classical computer 100. Classical computation performed using the execution results of quantum computation may be referred to as post-processing.

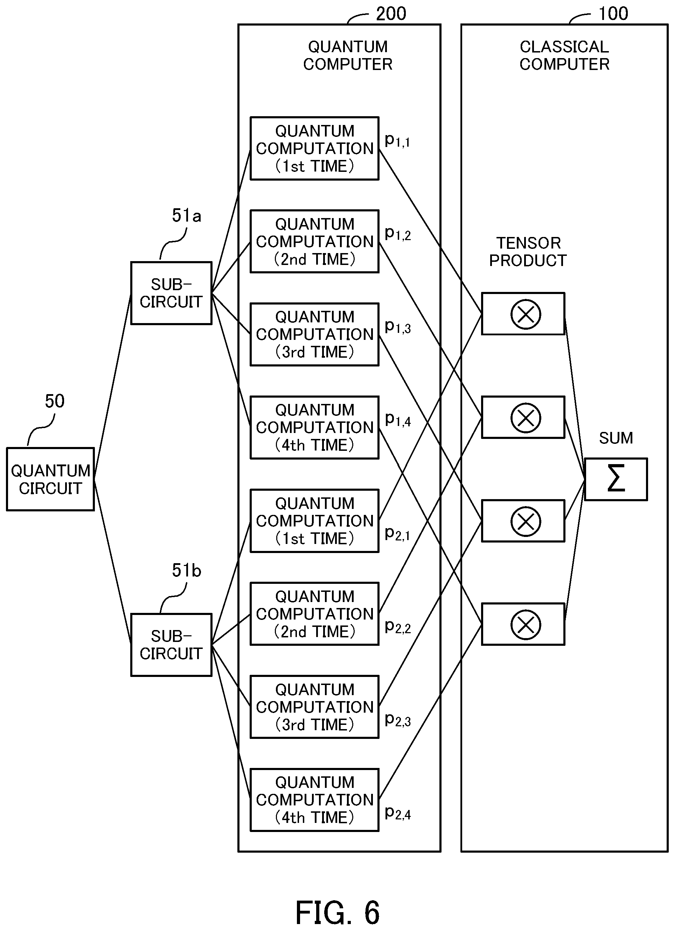

FIG. 6 illustrates an example of a probability amplitude computation process using classical computation. For example, it is assumed that a quantum circuit 50 is divided at one point (K = 1) to thereby generate two sub-circuits 51a and 51b ($n_C = 2$). In this case, the quantum computer 200 executes the quantum computation based on the sub-circuit 51a four times. The quantum computer 200 also executes the quantum computation based on the sub-circuit 51b four times. The quantum computer 200 may execute these quantum computations based on the sub-circuits 51a and 51b in parallel using the plurality of QPUs 202a, 202b, ....

The classical computer 100 computes tensor products based on the results of the quantum computations. For example, the classical computer 100 computes the tensor product of the probability amplitude "$p_{1,1}$" obtained in the first quantum computation based on the sub-circuit 51a and the probability amplitude "$p_{2,1}$" obtained in the first quantum computation based on the sub-circuit 51b. The classical computer 100 computes the tensor product of the probability amplitude "$p_{1,2}$" obtained in the second quantum computation based on the sub-circuit 51a and the probability amplitude "$p_{2,2}$" obtained in the second quantum computation based on the sub-circuit 51b. The classical computer 100 computes the tensor product of the probability amplitude "$p_{1,3}$" obtained in the third quantum computation based on the sub-circuit 51a and the probability amplitude "$p_{2,3}$" obtained in the third quantum computation based on the sub-circuit 51b. Further, the classical computer 100 computes the tensor product of the probability amplitude "$p_{1,4}$" obtained in the fourth quantum computation based on the sub-circuit 51a and the probability amplitude "$p_{2,4}$" obtained in the fourth quantum computation based on the sub-circuit 51b.

The classical computer 100 then computes the sum of the four tensor products obtained as the computation results. As a result, the probability amplitude of a predetermined observable in the quantum circuit 50 before the division is obtained.

Among the above computations, the computational complexity of computing tensor products increases on the order of $O(4^K)$ according to the number of divisions "K". Therefore, as the number of divisions increases, the time needed for the classical processing to compute the tensor products becomes longer.

The quantum computer 200 is able to parallelize the quantum computations of the sub-circuits 51a and 51b using the plurality of QPUs 202a, 202b, .... In the case of parallelizing the quantum computations, scheduling for executing the quantum computations based on the sub-circuits a plurality of times is performed. In the scheduling, the assignment of a QPU to each quantum computation process and the execution order of the quantum computations in each QPU are determined.

The purpose of dividing a quantum circuit into sub-circuits is to improve computational accuracy by using high-fidelity small-scale QPUs. Therefore, in the scheduling of quantum computations, scheduling may also be performed in consideration of the fidelity for each quantum computation. One of such scheduling techniques is noise and time aware distributed scheduler (NoTaDS).

NoTaDS is a scheduling method optimized through integer programming so as to assign each sub-circuit to a QPU that provides the highest fidelity and the shortest execution time. In NoTaDS, scheduling is performed according to the following procedure.

First, based on a list "C" of sub-circuits and a list "H" of QPUs, an optimal layout "$l_{ij}$" and a score "$Q_{ij}$" indicating a low error degree for the case where the ith sub-circuit ($i \in C$) is executed using the jth QPU ($j \in H$) are computed. The score "$Q_{ij}$" is, for example, a Mapomatic score. Let "F" denote the process of obtaining the optimal layout "$l_{ij}$" and the score "$Q_{ij}$" indicating a low error degree, this process is expressed as "$F: \{j, i\} \rightarrow \{l_{ij}, Q_{ij}\}$".

Here, a variable "$X_{ij}$" indicating whether the ith sub-circuit is to be executed using the jth QPU is defined by Formula (3).

$$X_{ij} = \begin{cases} 1 & \textit{if subcircuit i is scheduled to hardware j} \\ 0 & \textit{otherwise} \end{cases} \qquad (3)$$

"$X_{ij}$" takes a value "1" if the ith sub-circuit is to be executed using the jth QPU, and a value "0" otherwise. A constraint function using $\tau_j$ as the maximum execution time for the jth QPU is defined by Formula (4).

$$\sum_{i \in C} \eta_i \cdot t_i \cdot X_{ij} \leq \tau_j \qquad (4)$$

Formula (4) imposes a constraint that the time (QPU occupancy time) during which the QPU is occupied for a quantum computation is less than or equal to "$\tau_j$". "$\eta_i$" is defined by Formula (5).

$$\eta_i = \begin{cases} 1 & \textit{if all instances are scheduled individually} \\ v(\rho_i, O_i) & \textit{otherwise} \end{cases} \qquad (5)$$

"$\eta_i$" takes a value "1" if a plurality of quantum computations using the ith sub-circuit are individually scheduled, and takes a value "$v(\rho_i, o_i)$" otherwise. "$v(\rho_i, o_i)$" denotes the number of quantum computations using the ith sub-circuit. "$v(\rho_i, o_i)$" depends on the number of types "$\rho_i$" of initial values for the ith sub-circuit and the number of types "$o_i$" of basis conversions for measurement in the ith sub-circuit. "$t_i$" denotes the execution time of the ith sub-circuit.

By solving the objective function of Formula (6) through integer programming so as to satisfy the constraint condition of Formula (4), a schedule that achieves high fidelity is generated.

$$\min \sum_{i \in C, j \in H} X_{ij} \cdot Q_{ij} \qquad (6)$$

The details of NoTaDS are described in the aforementioned literature: Debasmita Bhoumik et al., "Distributed Scheduling of Quantum Circuits with Noise and Time Optimization". NoTaDS does not consider classical post-processing. For this reason, if the number of divisions increases, the use of NoTaDS may result in a longer post-processing time, which in turn causes the overall computation time to become longer.

In view of this, in the quantum computing system 300, the classical computer 100 performs job scheduling in consideration of the classical post-processing.

The classical computer 100 first estimates a post-processing time "T1" according to the number of divisions "K". For example, the classical computer 100 executes the computation of tensor products with the number of qubits "n" and the number of sub-circuits "$n_c$". The classical computer 100 then multiplies the computation time of the tensor products by $4^K$, which is the number of combinations each including an initial value and a basis conversion, and sets the resultant as the post-processing time "T1".

The classical computer 100 also estimates a quantum computation time "T2" in a QPU. For example, on the basis of the number of gates (depth) of each sub-circuit, the classical computer 100 estimates the time needed for one execution of a sub-circuit. Then, classical computer 100 multiplies the execution time per execution by the number of shots and the number of combinations "$4^K$" of basis conversions, and sets the resultant as the quantum computation time "T2".

The classical computer 100 changes a scheduling method depending on whether "T1 + T2" exceeds a user-specified threshold. For example, if the threshold is not exceeded, the classical computer 100 performs scheduling with priority given to fidelity. If the threshold is exceeded, the classical computer 100 preferentially schedules the jobs corresponding to the same combination k among the combinations (k = 1, ..., $4^K$) each including an initial value and a basis conversion.

The classical computer 100 instructs the quantum computer 200 to execute the quantum computations according to sub-circuits using the QPUs in the scheduled order. The classical computer 100, which receives the measurement results of the quantum computations, computes a tensor product upon receiving all the results for the kth combination. At this time, the computation timing of the tensor product differs depending on whether the fidelity-prioritized scheduling and the post-processing-prioritized scheduling is adopted.

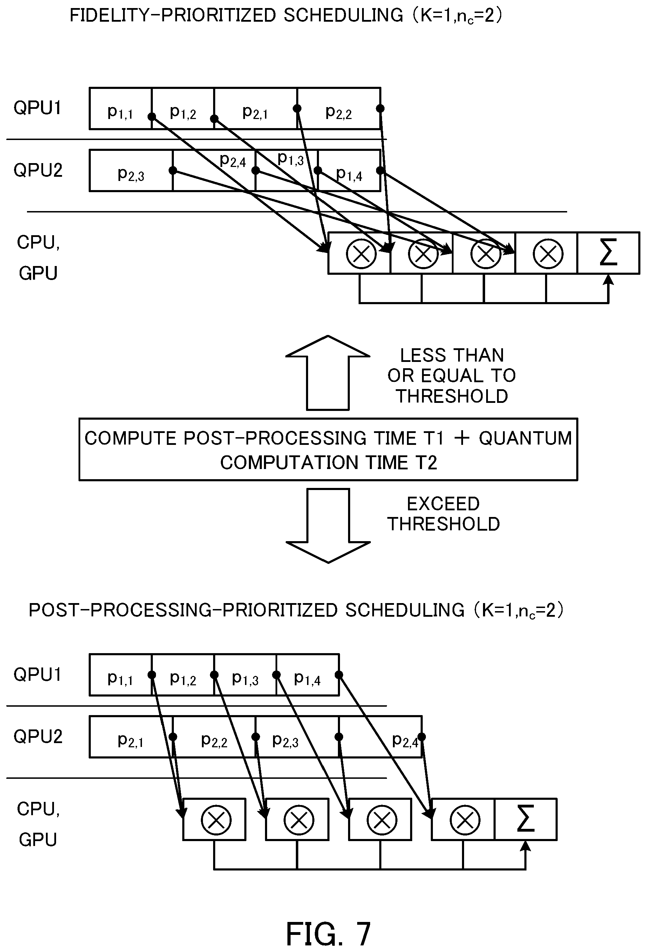

FIG. 7 illustrates an example of computation timing of tensor products for each scheduling method. FIG. 7 illustrates computation examples for the case of "K = 1" and "$n_C$ = 2". In this case, the quantum computation based on each sub-circuit is executed four times while changing an initialization circuit or a basis conversion circuit. The results of the quantum computations for the first sub-circuit are "$p_{1,1}$, $p_{1,2}$, $p_{1,3}$, and $p_{1,4}$". The results of the quantum computations for the second sub-circuit are "$p_{2,1}$, $p_{2,2}$, $p_{2,3}$, and $p_{2,4}$". The basis conversion used in the quantum computation that yields the result "$p_{1,1}$" and the initial value used in the quantum computation that yields the result "$p_{2,1}$" form a combination. The basis conversion used in the quantum computation that yields the result "$p_{1,2}$" and the initial value used in the quantum computation that yields the result "$p_{2,2}$" form a combination. The basis conversion used in the quantum computation that yields the result "$p_{1,3}$" and the initial value used in the quantum computation that yields the result "$p_{2,3}$" form a combination. The basis conversion used in the quantum computation that yields the result "$p_{1,4}$" and the initial value used in the quantum computation that yields the result "$p_{2,4}$" form a combination.

Two QPUs are usable. These QPUs are referred to as "QPU1" and "QPU2". The post-processing is performed by the processor 101 such as a CPU or the graphics controller 104 using a GPU in the classical computer 100.

If the sum of the post-processing time "T1" and the quantum computation time "T2" is less than or equal to the threshold, the fidelity-prioritized scheduling is performed. The fidelity-prioritized scheduling imposes an upper limit on the occupancy time of one QPU. Therefore, the fidelity-prioritized scheduling schedules an execution plan of the quantum computations using the sub-circuits so as to maximize the fidelity within the maximum execution time.

In the example of FIG. 7, the fidelity-prioritized scheduling provides the following quantum computation execution plan. The "QPU1" is caused to execute quantum computations in the order of the first quantum computation based on the first sub-circuit, the second quantum computation based on the first sub-circuit, the first quantum computation based on the second sub-circuit, and the second quantum computation based on the second sub-circuit. The "QPU2" is caused to execute quantum computations in the order of the third quantum computation based on the second sub-circuit, the fourth quantum computation based on the second sub-circuit, the third quantum computation based on the first sub-circuit, and the fourth quantum computation based on the first sub-circuit.

In this case, after the "QPU1" obtains the execution result "$p_{2,1}$" of the first quantum computation based on the second sub-circuit, the classical computer 100 computes the tensor product of "$p_{1,1}$" and "$p_{2,1}$". After the computation of the tensor product, the classical computer 100 computes the tensor product of "$p_{1,2}$" and "$p_{2,2}$", the tensor product of "$p_{1,3}$" and "$p_{2,3}$", and the tensor product of "$p_{1,4}$" and "$p_{2,4}$" in this order. Then, finally, the classical computer 100 computes the sum of the tensor products.

If the sum of the post-processing time "T1" and the quantum computation time "T2" exceeds the threshold, the post-processing-prioritized scheduling is performed. The post-processing-prioritized scheduling schedules an execution plan of the quantum computations so that the computation of tensor products in post-processing is executed early.

In the example of FIG. 7, the post-processing-prioritized scheduling provides the following quantum computation execution plan. The "QPU1" is caused to execute quantum computations in the order of the first quantum computation based on the first sub-circuit, the second quantum computation based on the first sub-circuit, the third quantum computation based on the first sub-circuit, and the fourth quantum computation based on the first sub-circuit. The "QPU2" is caused to execute quantum computations in the order of the first quantum computation based on the second sub-circuit, the second quantum computation based on the second sub-circuit, the third quantum computation based on the second sub-circuit, and the fourth quantum computation based on the second sub-circuit.

In this case, after the "QPU1" and "QPU2" obtain the execution results "$p_{1,1}$" and "$p_{2,1}$" of the first quantum computations based on the two sub-circuits, respectively, the classical computer 100 computes the tensor product of "$p_{1,1}$" and "$p_{2,1}$". After the "QPU1" and "QPU2" obtain the execution results "$p_{1,2}$" and "$p_{2,2}$" of the second quantum computations based on the two sub-circuits, respectively, the classical computer 100 computes the tensor product of "$p_{1,2}$" and "$p_{2,2}$". After the "QPU1" and "QPU2" obtain the execution results "$p_{1,3}$" and "$p_{2,3}$" of the third quantum computations based on the two sub-circuits, respectively, the classical computer 100 computes the tensor product of "$p_{1,3}$" and "$p_{2,3}$". After the "QPU1" and "QPU2" obtain the execution results "$p_{1,4}$" and "$p_{2,4}$" of the fourth quantum computations based on the two sub-circuits, respectively, the classical computer 100 computes the tensor product of "$p_{1,4}$" and "$p_{2,4}$". Then, finally, the classical computer 100 computes the sum of the tensor products.

In the post-processing-prioritized scheduling, the period during which the quantum computer 200 executes the quantum computations and the period during which the classical computer 100 executes the post-processing largely overlap each other. Compared with the fidelity-prioritized scheduling, the post-processing-prioritized scheduling allows the computation timing of tensor products to begin early by the amount of the overlap between the execution periods. That is, applying the post-processing-prioritized scheduling enables a reduction in the computation time from the start of the quantum computations to the end of the post-processing.

If it is expected to compute the tensor products in a short time, the fidelity-prioritized scheduling may be used to perform quantum computations with high fidelity.

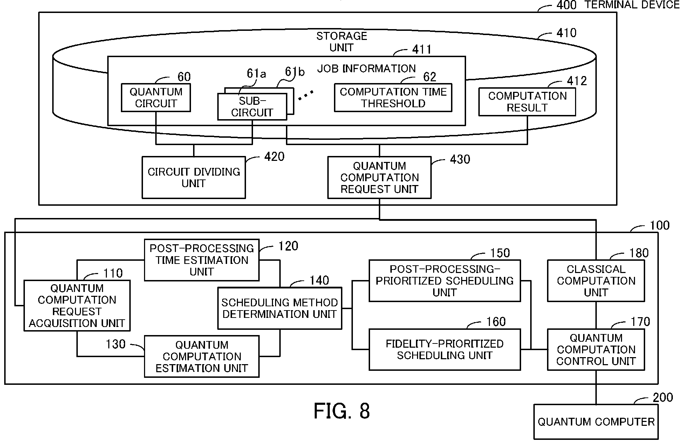

FIG. 8 is a block diagram illustrating an example of functions of each device used for quantum computation. The terminal device 400 includes a storage unit 410, a circuit dividing unit 420, and a quantum computation request unit 430. The storage unit 410 stores job information 411 indicating the content of quantum computation, and a computation result 412. The job information 411 includes information such as a quantum circuit 60, sub-circuits 61a, 61b, ..., and a computation time threshold 62. The quantum circuit 60 is a quantum computation model in which a procedure for obtaining a solution to a problem to be solved using quantum computation is represented using quantum gates. The sub-circuits 61a, 61b, ... are small-scale quantum circuits generated by dividing the quantum circuit 60. The computation time threshold 62 is a threshold for the computation time used for determining a scheduling method. The computation time threshold 62 is preset by the user.

The circuit dividing unit 420 divides the quantum circuit 60 into the plurality of sub-circuits 61a, 61b, .... For example, the circuit dividing unit 420 acquires the quantum circuit 60 from the storage unit 410 and determines one or more dividing points according to a predetermined rule. The circuit dividing unit 420 then divides the quantum circuit 60 at the one or more dividing points to generate the plurality of sub-circuits 61a, 61b, .... The circuit dividing unit 420 stores the plurality of generated sub-circuits 61a, 61b, ... in the storage unit 410.

The quantum computation request unit 430 transmits a quantum computation request based on the job information 411 to the classical computer 100. Upon receiving a quantum computation result from the classical computer 100, the quantum computation request unit 430 stores the computation result 412 in the storage unit 410.

The classical computer 100 includes a quantum computation request acquisition unit 110, a post-processing time estimation unit 120, a quantum computation time estimation unit 130, a scheduling method determination unit 140, a post-processing-prioritized scheduling unit 150, a fidelity-prioritized scheduling unit 160, a quantum computation control unit 170, and a classical computation unit 180.

The quantum computation request acquisition unit 110 acquires a quantum computation request including the job information 411 from the terminal device 400. Upon acquiring the quantum computation request, the quantum computation request acquisition unit 110 transmits the job information 411 to the post-processing time estimation unit 120 and the quantum computation time estimation unit 130.

The post-processing time estimation unit 120 estimates a post-processing time. For example, in the case where the number of qubits is "n" and the number of sub-circuits is "$n_C$", the post-processing time estimation unit 120 computes the tensor product of execution results obtained by executing each sub-circuit once. Then, on the basis of the number of combinations "$4^K$" each including an initial value and a basis conversion, the post-processing time estimation unit 120 sets $4^K$ times the computation time of the tensor product as the post-processing time.

The quantum computation time estimation unit 130 estimates a quantum computation time. For example, on the basis of the number of gates and depth of each sub-circuit, the quantum computation time estimation unit 130 estimates the execution time per execution of a sub-circuit. Then, the quantum computation time estimation unit 130 sets a value obtained by multiplying the estimated time per execution by the number of shots and the number of combinations "$4^K$" each including an initial value and a basis conversion, as the quantum computation time.

The scheduling method determination unit 140 determines a scheduling method on the basis of the post-processing time and the quantum computation time. For example, in the case where the sum of the post-processing time and the quantum computation time exceeds the computation time threshold 62, the scheduling method determination unit 140 selects the post-processing-prioritized scheduling method. In the case where the sum of the post-processing time and the quantum computation time is less than or equal to the computation time threshold 62, the scheduling method determination unit 140 selects the fidelity-prioritized scheduling method.

The post-processing-prioritized scheduling unit 150 schedules the execution of the sub-circuits with priority given to post-processing. For example, the post-processing-prioritized scheduling unit 150 performs the scheduling such that, for each combination of an initial value and a basis conversion ($k = 1, 2, ..., 4^K$), the quantum computations based on the sub-circuits involving the initial value and basis conversion of the same combination are executed in time slots as close as possible.

The fidelity-prioritized scheduling unit 160 schedules the execution of the sub-circuits with priority given to fidelity. For example, the fidelity-prioritized scheduling unit 160 performs the scheduling using NoTaDS so as to maximize the fidelity under the constraint that the QPU occupancy time is less than or equal to a predetermined value.

The quantum computation control unit 170 instructs the quantum computer to execute each sub-circuit according to the determined schedule. When instructing the execution of sub-circuits, the quantum computation control unit 170 adds an initialization circuit to set an initial value and a basis conversion circuit corresponding to a basis to be measured, to each sub-circuit. Then, according to the schedule, the quantum computation control unit 170 instructs the quantum computer 200 to execute each sub-circuit, specifying a QPU for the execution. Upon receiving an execution result from the quantum computer 200, the quantum computation control unit 170 transmits the execution result to the classical computation unit 180.

Upon receiving execution results for a plurality of sub-circuits corresponding to a combination of an initial value and a basis conversion, the classical computation unit 180 computes the tensor product of the execution results. When the classical computation unit 180 computes the tensor products for all the combinations each including an initial value and a basis conversion, the classical computation unit 180 computes the sum of the tensor products as a quantum computation result. The classical computation unit 180 transmits the quantum computation result to the terminal device 400.

The functions of each element in the terminal device 400 or the classical computer 100 illustrated in FIG. 8 may be implemented, for example, by causing the processor 101 to execute a program module corresponding to the element.

Next, a procedure for a quantum computation support process performed by the classical computer 100 that has received a quantum computation request will be described in detail.

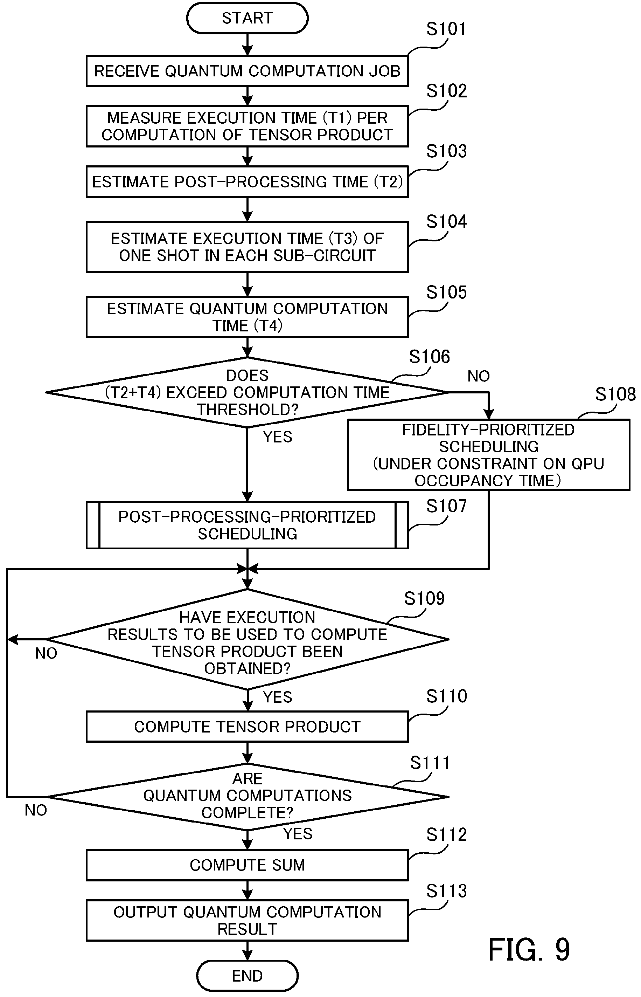

FIG. 9 is a flowchart illustrating an example procedure for a quantum computation support process. Hereinafter, the process illustrated in FIG. 9 will be described in order of step numbers.

[Step S101] The quantum computation request acquisition unit 110 receives a quantum computation job. For example, the quantum computation request acquisition unit 110 acquires a quantum computation request transmitted from the terminal device 400. On the basis of the job information included in the acquired quantum computation request, the quantum computation request acquisition unit 110 receives the quantum computation job indicated by the job information. The quantum computation request acquisition unit 110 transmits job information on the received quantum computation job to the post-processing time estimation unit 120 and the quantum computation time estimation unit 130.

[Step S102] The post-processing time estimation unit 120 estimates an execution time "T1" per computation of a tensor product. For example, the post-processing time estimation unit 120 pseudo-generates the execution result of each sub-circuit for the case of the number of qubits "n" and the number of sub-circuits "$n_C$". The post-processing time estimation unit 120 computes the tensor product of the pseudo-generated execution results of the sub-circuits, and measures the computation time. The post-processing time estimation unit 120 sets the measured time as the execution time "T1".

[Step S103] The post-processing time estimation unit 120 estimates a post-processing time "T2". For example, the post-processing time estimation unit 120 computes "$4^K$" times the execution time "T1" measured in step S102, and sets the computation result as the post-processing time "T2".

[Step S104] The quantum computation time estimation unit 130 estimates an execution time "T3" of one shot in each sub-circuit. For example, the quantum computation time estimation unit 130 estimates the execution time "T3" based on the execution time of each quantum gate included in each sub-circuit and the depth of each sub-circuit.

[Step S105] The quantum computation time estimation unit 130 estimates a quantum computation time "T4" of the quantum computer 200. For example, the quantum computation time estimation unit 130 multiplies the execution time "T3" estimated in step S104 by the number of shots and the number of combinations "$4^K$" each including an initial value and a basis conversion, and divides the result by the number of usable QPUs. Then, the quantum computation time estimation unit 130 sets the result (quotient) of the division as the quantum computation time "T4".

[Step S106] The scheduling method determination unit 140 determines whether the sum (T2 + T4) of the post-processing time "T2" and the quantum computation time "T4" exceeds the computation time threshold. If the sum exceeds a computation time threshold, the scheduling method determination unit 140 advances the process to step S107. If the sum does not exceed the computation time threshold, the scheduling method determination unit 140 advances the process to step S108.

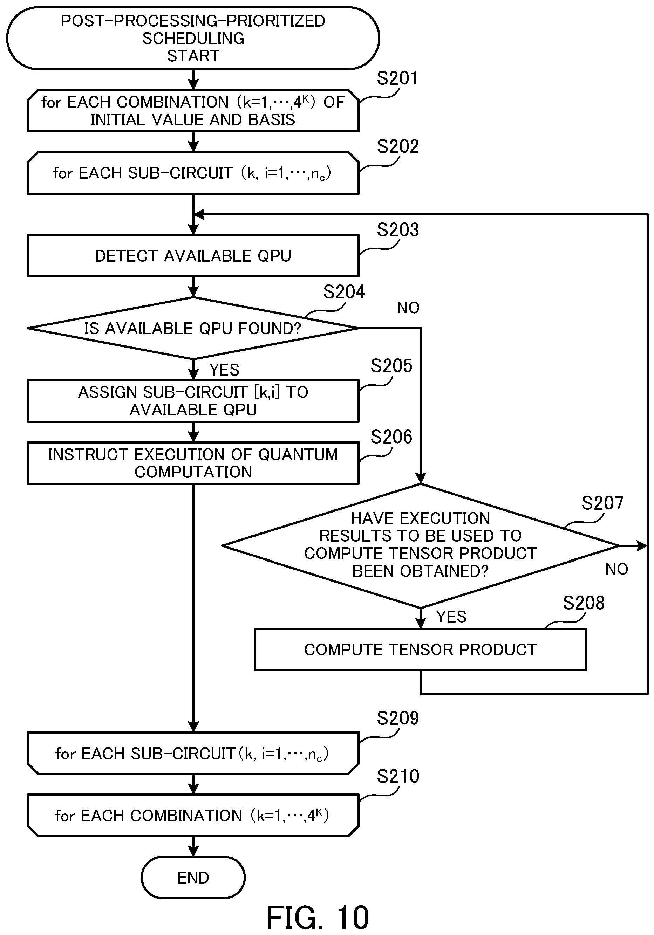

[Step S107] The post-processing-prioritized scheduling unit 150 performs post-processing-prioritized scheduling. The details of the post-processing-prioritized scheduling process will be described later (see FIG. 10). Thereafter, the post-processing-prioritized scheduling unit 150 advances the process to step S109.

[Step S108] The fidelity-prioritized scheduling unit 160 performs fidelity-prioritized scheduling under the constraint on the QPU occupancy time. For example, the fidelity-prioritized scheduling unit 160 determines, using integer programming, a schedule that maximizes fidelity within the range in which the maximum QPU occupancy time for the sub-circuits is less than or equal to a preset maximum execution time.

When the scheduling is completed, the quantum computation control unit 170 instructs the quantum computer 200 to perform quantum computations according to the determined schedule. Upon acquiring the execution result of a quantum computation from the quantum computer 200, the quantum computation control unit 170 transmits the execution result to the classical computation unit 180.

[Step S109] The classical computation unit 180 determines whether it has obtained a plurality of execution results to be used to compute a tensor product. What are used to compute a tensor product are the execution results of the sub-circuits corresponding to a combination of an initial value and a basis conversion. If a plurality of execution results to be used to compute a tensor product have been obtained, the classical computation unit 180 advances the process to step S110. In addition, if a plurality of execution results to be used to compute a tensor product have not yet been obtained, the classical computation unit 180 repeats the determination of step S109.

[Step S110] The classical computation unit 180 computes the tensor product of the plurality of execution results, which are to be used to compute the tensor product.

[Step S111] The classical computation unit 180 determines whether all quantum computations by the quantum computer 200 have been completed. If all the quantum computations have been completed, the classical computation unit 180 advances the process to step S112. If any sub-circuit remains for which a quantum computation has not been completed, the classical computation unit 180 advances the process to step S109.

[Step S112] The classical computation unit 180 sums the tensor products.

[Step S113] The classical computation unit 180 transmits the sum of the tensor products to the terminal device 400 as a quantum computation result.

In this way, the execution plan for the sub-circuits is generated using an appropriate scheduling method. That is, if the sum of the post-processing time "T2" and the quantum computation time "T4" does not exceed the threshold, scheduling is performed so as to increase fidelity. On the other hand, if the sum of the post-processing time "T2" and the quantum computation time "T4" exceeds the threshold, scheduling is performed so as to start and complete the post-processing as early as possible.

FIG. 10 is a flowchart illustrating an example procedure for the post-processing-prioritized scheduling process. Hereinafter, the process illustrated in FIG. 10 will be described in order of step numbers.

[Step S201] The post-processing-prioritized scheduling unit 150 executes steps S202 to S209 for each combination ($k = 1, ..., 4^K$) of an initial value and a basis conversion. For example, the post-processing-prioritized scheduling unit 150 executes steps S202 to S209 for the "k"th combination while counting up the "k" value from "1".

[Step S202] The post-processing-prioritized scheduling unit 150 executes steps S203 to S208 for each sub-circuit ($i = 1, ..., n_C$). For example, the post-processing-prioritized scheduling unit 150 executes steps S203 to S208 for the "i"th sub-circuit while counting up the "i" value from "1".

[Step S203] The post-processing-prioritized scheduling unit 150 detects available QPUs in the quantum computer 200. For example, the quantum computation control unit 170 makes instructions to execute quantum computations and manages QPUs during the quantum computations. The post-processing-prioritized scheduling unit 150 acquires a list of QPUs (available QPUs) that are not currently performing quantum computations from the quantum computation control unit 170.

[Step S204] The post-processing-prioritized scheduling unit 150 determines whether any available QPU is found. If an available QPU is found, the post-processing-prioritized scheduling unit 150 advances the process to step S205. When no available QPU is found, the post-processing-prioritized scheduling unit 150 advances the process to step S207.

[Step S205] The post-processing-prioritized scheduling unit 150 assigns the "i"th sub-circuit [k, i] obtained by adding the initialization circuit and the basis conversion circuit corresponding to the "k"th combination to the available QPU.

[Step S206] The quantum computation control unit 170 instructs the quantum computer 200 to execute the sub-circuit [k, i] using the available QPU. Then, the quantum computer 200 executes the sub-circuit according to the instruction, and returns the probability amplitude based on the measurement result of the qubit states as an execution result. The quantum computation control unit 170 acquires the execution result from the quantum computer 200. Each time the quantum computation control unit 170 acquires an execution result, the quantum computation control unit 170 transmits the acquired execution result to the classical computation unit 180.

After the quantum computation control unit 170 makes the instruction to execute the quantum computation, the post-processing-prioritized scheduling unit 150 advances the process to step S209.

[Step S207] The classical computation unit 180 determines whether it has obtained a plurality of execution results to be used to compute a tensor product. What are to be used to compute a tensor product are the execution results of the sub-circuits corresponding to a combination of an initial value and a basis conversion. If a plurality of execution results to be used to compute a tensor product have been obtained, the classical computation unit 180 advances the process to step S208. In addition, if a plurality of execution results to be used to compute a tensor product have not been obtained, the classical computation unit 180 advances the process to step S203.

[Step S208] The classical computation unit 180 computes a tensor product. After the classical computation unit 180 computes the tensor product, the post-processing-prioritized scheduling unit 150 advances the process to step S203.

[Step S209] When the post-processing-prioritized scheduling unit 150 determines that all the sub-circuits have been executed for the kth combination, the process proceeds to step S210.

[Step S210] The post-processing-prioritized scheduling unit 150 ends the post-processing-prioritized scheduling process when all the combinations ($k = 1, ..., 4^K$) each including an initial value and a basis conversion have been completed.

In this way, it is possible to execute the quantum computation represented by the original quantum circuit efficiently.

Although the embodiments have been exemplified, the configuration of each unit described in the embodiments may be replaced with another configuration having the same function. In addition, any other components or processes may be added. Furthermore, any two or more configurations (features) of the above-described embodiments may be combined.

According to an embodiment of one aspect, the efficiency of computation based on a quantum circuit is improved.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A computer program that causes a computer to perform a process comprising:

   dividing a quantum circuit (2) at a dividing point (2a) on a line representing gate operations on a qubit in the quantum circuit (2) to generate a first sub-circuit (3) and a second sub-circuit (4), the first sub-circuit (3) including gate operations before the dividing point (2a) for a first qubit corresponding to the dividing point (2a), the second sub-circuit (4) including gate operations after the dividing point (2a) for the first qubit;
   generating a plurality of combinations (5a, 5b, ...), each of which includes one of a plurality of basis conversions to be performed at an end portion (3a) of the first sub-circuit (3) corresponding to the dividing point (2a) and one of a plurality of initial values to be set at a start portion (4a) of the second sub-circuit (4) corresponding to the dividing point (2a);
   sequentially selecting a combination to be used for execution from the plurality of combinations (5a, 5b, ...);
   causing a quantum computer (1) to execute, in order from the selected combination, a first quantum computation (6) including execution of the first sub-circuit (3) and a basis conversion indicated in the selected combination at the end portion (3a) of the first sub-circuit (3), and a second quantum computation (7) including initialization to an initial value indicated by the selected combination at the start portion (4a) of the second sub-circuit (4) and execution of the second sub-circuit (4);
   computing, upon acquiring execution results of the first quantum computation (6) and the second quantum computation (7) for any one of the plurality of combinations, a tensor product based on the acquired execution results; and
   computing a sum of tensor products computed for the plurality of combinations.

2. The computer program according to claim 1, wherein, in causing the quantum computer (1) to execute the first quantum computation (6) and the second quantum computation (7), the process includes:

   upon detecting an available qubit device among a plurality of qubit devices (1a, 1b) included in the quantum computer (1) after instructing the quantum computer (1) to execute one of the first quantum computation (6) or the second quantum computation (7) for an Nth selected combination, which is a first combination, instructing the quantum computer (1) to execute another of the first quantum computation (6) or the second quantum computation (7) for the first combination, the N being a natural number; and

upon detecting the available qubit device among the plurality of qubit devices (1a, 1b) after instructing the quantum computer (1) to execute both the first quantum computation (6) and the second quantum computation (7) for the first combination, instructing the quantum computer (1) to execute the first quantum computation (6) or the second quantum computation (7) for an (N + 1)th selected combination, which is a second combination.

3. The computer program according to any preceding claim, further comprising:

computing a first time needed to execute the first quantum computation (6) and the second quantum computation (7) for the plurality of combinations (5a, 5b, ...) and a second time needed to compute the tensor products respectively for the plurality of combinations (5a, 5b, ...) and compute the sum of the tensor products; and

upon determining that the first time and the second time satisfy a predetermined condition, sequentially selecting the combination to be used for execution from the plurality of combinations (5a, 5b, ...) and causing the quantum computer (1) to execute, in order from the selected combination, the first quantum computation (6) and the second quantum computation (7).

4. The computer program according to claim 3, wherein, in causing the quantum computer (1) to execute the first quantum computation (6) and the second quantum computation (7), the process includes, upon determining that a sum of the first time and the second time exceeds a threshold, sequentially selecting the combination to be used for execution from the plurality of combinations (5a, 5b, ...) and causing the quantum computer (1) to execute, in order from the selected combination, the first quantum computation (6) and the second quantum computation (7) corresponding to the selected combination.

5. The computer program according to claim 3 or 4, further comprising

upon determining that the first time and the second time do not satisfy the predetermined condition, determining a schedule for executing the first quantum computation (6) and the second quantum computation (7) for each of the plurality of combinations (5a, 5b, ...) using a plurality of qubit devices (1a, 1b) included in the quantum computer (1), based on an error rate of each of the plurality of qubit devices (1a, 1b), and

instructing the quantum computer (1) to execute the first quantum computation (6) and the second quantum computation (7) for each of the plurality of combinations (5a, 5b, ...) according to the determined schedule.

6. A quantum computation support method executed by a computer, the quantum computation support method comprising:

dividing a quantum circuit (2) at a dividing point (2a) on a line representing gate operations on a qubit in the quantum circuit (2) to generate a first sub-circuit (3) and a second sub-circuit (4), the first sub-circuit (3) including gate operations before the dividing point (2a) for a first qubit corresponding to the dividing point (2a), the second sub-circuit (4) including gate operations after the dividing point (2a) for the first qubit;

generating a plurality of combinations (5a, 5b, ...), each of which includes one of a plurality of basis conversions to be performed at an end portion (3a) of the first sub-circuit (3) corresponding to the dividing point (2a) and one of a plurality of initial values to be set at a start portion (4a) of the second sub-circuit (4) corresponding to the dividing point (2a);

sequentially selecting, by the processor, a combination to be used for execution from the plurality of combinations (5a, 5b, ...);

causing a quantum computer (1) to execute, in order from the selected combination, a first quantum computation (6) including execution of the first sub-circuit (3) and a basis conversion indicated in the selected combination at the end portion (3a) of the first sub-circuit (3), and a second quantum computation (7) including initialization to an initial value indicated by the selected combination at the start portion (4a) of the second sub-circuit (4) and execution of the second sub-circuit (4);

computing upon acquiring execution results of the first quantum computation (6) and the second quantum computation (7) for any one of the plurality of combinations, a tensor product based on the acquired execution results; and

computing a sum of tensor products computed for the plurality of combinations.

7. An information processing apparatus comprising:
processing means for

dividing a quantum circuit (2) at a dividing point (2a) on a line representing gate operations on a qubit in the quantum circuit (2) to generate a first sub-circuit (3) and a second sub-circuit (4), the first sub-circuit (3) including gate operations before the dividing point (2a) for a first qubit corresponding to the dividing point (2a), the second sub-circuit (4) including gate operations after the dividing point (2a) for the first qubit,

generating a plurality of combinations (5a, 5b, ...), each of which includes one of a plurality of basis conversions to be performed at an end portion (3a) of the first sub-circuit (3) corresponding to the dividing point (2a) and one of a plurality of initial values to be set at a start portion (4a) of the second sub-circuit (4) corresponding to the dividing point (2a),

sequentially selecting a combination to be used for execution from the plurality of combinations (5a, 5b, ...), and causing a quantum computer (1) to execute, in order from the selected combination, a first quantum computation (6) including execution of the first sub-circuit (3) and a basis conversion indicated in the selected combination at the end portion (3a) of the first sub-circuit (3), and a second quantum computation (7) including initialization to an initial value indicated by the selected combination at the start portion (4a) of the second sub-circuit (4) and execution of the second sub-circuit (4),

computing, upon acquiring execution results of the first quantum computation (6) and the second quantum computation (7) for any one of the plurality of combinations, a tensor product based on the acquired execution results, and

computing a sum of tensor products computed for the plurality of combinations.

FIG. 1

**400 TERMINAL DEVICE**

**20**

NETWORK

**300**

QUANTUM COMPUTING SYSTEM

**200**

**100**

QUANTUM COMPUTER

CLASSICAL COMPUTER

## FIG. 2

21 MONITOR

100 CLASSICAL COMPUTER

104

101

PROCESSOR

GRAPHICS CONTROLLER

22 KEYBOARD

105

102

MEMORY

INPUT INTERFACE

23 MOUSE

OPTICAL DISC

106

24

103

STORAGE DEVICE

OPTICAL DRIVE DEVICE

107

25 MEMORY DEVICE

108

NETWORK INTERFACE

DEVICE CONNECTION INTERFACE

109

100a BUS

COMMUNI-CATION INTERFACE

26 MEMORY READER-WRITER

27 MEMORY CARD

20

200

NETWORK

QUANTUM COMPUTER

201

CONTROL DEVICE

202b

202a

QPU

...

FIG. 3

K=1,n_c=2

FIG. 4

30 QUANTUM CIRCUIT

$q_0 : |0\rangle$ ── H ──●──●── $R_X(\pi/2)$ ── T ── H ──

$q_1 : |0\rangle$ ── H ──●── $R_X(\pi/2)$ ── T ── H ──

$q_2 : |0\rangle$ ── H ── T ──●──✕──●──●── H ──

$q_3 : |0\rangle$ ── H ── T ──●── H ──

$q_4 : |0\rangle$ ── H ── T ── $R_X(\pi/2)$ ──●── $R_X(\pi/2)$ ── H ──

31 SUB-CIRCUIT

$subsirc1_0 : |0\rangle$ ── H ──●──●── $R_X(\pi/2)$ ── T ── H ──

$subsirc1_1 : |0\rangle$ ── H ──●── $R_X(\pi/2)$ ── T ── H ──

$subsirc1_2 : |0\rangle$ ── H ── T ──●── I,X,Y,Z

32 SUB-CIRCUIT

$subsirc1_0 : |0\rangle$ $|0\rangle, |1\rangle, |+\rangle, |i\rangle,$ ──●──●── H ──

$subsirc1_1 : |0\rangle$ ── H ── T ──●── H ──

$subsirc1_2 : |0\rangle$ ── H ── T ── $R_X(\pi/2)$ ──●── $R_X(\pi/2)$ ── H ──

K=2,n_c=2

FIG. 5

40 QUANTUM CIRCUIT

41 SUB-CIRCUIT

42 SUB-CIRCUIT

FIG. 6

FIDELITY-PRIORITIZED SCHEDULING (K=1,$n_c$=2)

QPU1 | $p_{1,1}$ | $p_{1,2}$ | $p_{2,1}$ | $p_{2,2}$

QPU2 | $p_{2,3}$ | $p_{2,4}$ | $p_{1,3}$ | $p_{1,4}$

CPU, GPU | $\otimes$ | $\otimes$ | $\otimes$ | $\otimes$ | $\Sigma$

LESS THAN
OR EQUAL TO
THRESHOLD

COMPUTE POST-PROCESSING TIME T1 + QUANTUM
COMPUTATION TIME T2

EXCEED
THRESHOLD

POST-PROCESSING-PRIORITIZED SCHEDULING (K=1,$n_c$=2)

QPU1 | $p_{1,1}$ | $p_{1,2}$ | $p_{1,3}$ | $p_{1,4}$

QPU2 | $p_{2,1}$ | $p_{2,2}$ | $p_{2,3}$ | $p_{2,4}$

CPU, GPU | $\otimes$ | $\otimes$ | $\otimes$ | $\otimes$ | $\Sigma$

FIG. 7

400 TERMINAL DEVICE

STORAGE UNIT — 410

JOB INFORMATION — 411

QUANTUM CIRCUIT — 60

SUB-CIRCUIT — 61a 61b

COMPUTATION TIME THRESHOLD — 62

COMPUTATION RESULT — 412

CIRCUIT DIVIDING UNIT — 420

QUANTUM COMPUTATION REQUEST UNIT — 430

100

POST-PROCESSING TIME ESTIMATION UNIT — 120

QUANTUM COMPUTATION REQUEST ACQUISITION UNIT — 110

SCHEDULING METHOD DETERMINATION UNIT — 140

POST-PROCESSING-PRIORITIZED SCHEDULING UNIT — 150

CLASSICAL COMPUTATION UNIT — 180

QUANTUM COMPUTATION ESTIMATION UNIT — 130

FIDELITY-PRIORITIZED SCHEDULING UNIT — 160

QUANTUM COMPUTATION CONTROL UNIT — 170

QUANTUM COMPUTER — 200

FIG. 8

START

RECEIVE QUANTUM COMPUTATION JOB — S101

MEASURE EXECUTION TIME (T1) PER COMPUTATION OF TENSOR PRODUCT — S102

ESTIMATE POST-PROCESSING TIME (T2) — S103

ESTIMATE EXECUTION TIME (T3) OF ONE SHOT IN EACH SUB-CIRCUIT — S104

ESTIMATE QUANTUM COMPUTATION TIME (T4) — S105

DOES (T2+T4) EXCEED COMPUTATION TIME THRESHOLD? — S106

NO

FIDELITY-PRIORITIZED SCHEDULING (UNDER CONSTRAINT ON QPU OCCUPANCY TIME) — S108

YES

POST-PROCESSING-PRIORITIZED SCHEDULING — S107

HAVE EXECUTION RESULTS TO BE USED TO COMPUTE TENSOR PRODUCT BEEN OBTAINED? — S109

NO

YES

COMPUTE TENSOR PRODUCT — S110

ARE QUANTUM COMPUTATIONS COMPLETE? — S111

NO

YES

COMPUTE SUM — S112

OUTPUT QUANTUM COMPUTATION RESULT — S113

END

FIG. 9

POST-PROCESSING-PRIORITIZED
SCHEDULING
START

S201
for EACH COMBINATION $(k=1,\cdots,4^K)$ OF
INITIAL VALUE AND BASIS

S202
for EACH SUB-CIRCUIT $(k, i=1,\cdots,n_c)$

S203
DETECT AVAILABLE QPU

S204
IS AVAILABLE QPU FOUND?
NO
YES

S205
ASSIGN SUB-CIRCUIT [k,i] TO
AVAILABLE QPU

S206
INSTRUCT EXECUTION OF QUANTUM
COMPUTATION

S207
HAVE EXECUTION
RESULTS TO BE USED TO
COMPUTE TENSOR PRODUCT
BEEN OBTAINED?
NO
YES

S208
COMPUTE TENSOR PRODUCT

S209
for EACH SUB-CIRCUIT $(k, i=1,\cdots,n_c)$

S210
for EACH COMBINATION $(k=1,\cdots,4^K)$

END

FIG. 10

**EUROPEAN SEARCH REPORT**

Application Number

EP 25 19 5110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TANG WEI ET AL: "CutQC: using small Quantum computers for large Quantum circuit evaluations", PROCEEDINGS OF THE SIGCHI CONFERENCE ON HUMAN FACTORS IN COMPUTING SYSTEMS, ACMPUB27, NEW YORK, NY, USA, 19 April 2021 (2021-04-19), pages 473-486, XP059007752, DOI: 10.1145/3445814.3446758 ISBN: 978-1-4503-9170-2 * abstract * * chapters 1-8; page 473 - page 483; figures 1-12 * | 1-7 | INV. G06N10/20 G06N10/80 G06N10/60 |
| A | RAVI GOKUL SUBRAMANIAN ET AL: "Adaptive job and resource management for the growing quantum cloud", 2021 IEEE INTERNATIONAL CONFERENCE ON QUANTUM COMPUTING AND ENGINEERING (QCE), IEEE, 17 October 2021 (2021-10-17), pages 301-312, XP034026133, DOI: 10.1109/QCE52317.2021.00047 [retrieved on 2021-11-05] * abstract * * chapters I-VII; page 301 - page 310; figures 1-14 * | 1-7 | |

TECHNICAL FIELDS SEARCHED (IPC)

G06N

The present search report has been drawn up for all claims

| Place of search | Date of completion of the search | Examiner |
|---|---|---|
| The Hague | 22 November 2025 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020534603 A
- JP 2021530783 A

- US 20170223143
- US 20180365585

**Non-patent literature cited in the description**

- **DEBASMITA BHOUMIK** ; **RITAJIT MAJUMDAR** ; **AMIT SAHA** ; **SUSMITA SUR-KOLAY**. Distributed Scheduling of Quantum Circuits with Noise and Time Optimization. *arXiv.2309.06005v2*, 12 October 2023

- **DEBASMITA BHOUMIK et al.** *Distributed Scheduling of Quantum Circuits with Noise and Time Optimization*